(19) Europäisches Patentamt
European Patent Office
Office européen des brevets

(11) EP 1 561 147 B1

(12) # EUROPÄISCHE PATENTSCHRIFT

(45) Veröffentlichungstag und Bekanntmachung des Hinweises auf die Patenterteilung:
**09.01.2008 Patentblatt 2008/02**

(21) Anmeldenummer: **03779921.0**

(22) Anmeldetag: **13.11.2003**

(51) Int Cl.:
***G02C 7/02*** *(2006.01)*

(86) Internationale Anmeldenummer:
**PCT/EP2003/012713**

(87) Internationale Veröffentlichungsnummer:
**WO 2004/044643 (27.05.2004 Gazette 2004/22)**

(54) **DOPPELPROGRESSIVES BRILLENGLAS**

DOUBLE VARIFOCAL OPHTHALMIC LENS

VERRE DE LUNETTES A EFFET PROGRESSIF DOUBLE

(84) Benannte Vertragsstaaten:
**DE ES FR GB IT**

(30) Priorität: **14.11.2002 DE 10253130**

(43) Veröffentlichungstag der Anmeldung:
**10.08.2005 Patentblatt 2005/32**

(73) Patentinhaber: **Rodenstock GmbH**
**80469 München (DE)**

(72) Erfinder:
- **ESSER, Gregor**
**81735 München (DE)**
- **HAIMERL, Walter**
**80337 München (DE)**
- **WEHNER, Edda**
**82275 Emmering (DE)**
- **WELK, Andrea**
**81547 München (DE)**
- **ALTHEIMER, Helmut**
**87650 Baisweil-Lauchdorf (DE)**
- **ZIMMERMANN, Martin**
**85253 Erdweg-Kleinberghofen (DE)**

(74) Vertreter: **Müller-Boré & Partner**
**Patentanwälte**
**Grafinger Strasse 2**
**81671 München (DE)**

(56) Entgegenhaltungen:
**EP-A- 0 996 023**
**WO-A-02/061496**
**DE-A- 19 701 312**

EP 1 561 147 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung bezieht sich auf Verfahren zum Herstellen eines doppelprogressiven Brillenglases.

Einfache progressive Brillengläser wie auch doppelprogressive Brillengläser sind vom Stand der Technik her bekannt. Beispielsweise beschreibt die DE 197 01 312 A1 ein Brillenglas mit sphärischer Vorderseite und multifokaler Rückseite, sowie ein Verfahren zu seiner Herstellung. Die DE 33 31 757 A1 beschreibt ein progressives Brillenglas mit konvexer asphärischer Vorderfläche und konkaver asphärischer Innenfläche.

Jedoch hat es sich bei Brillengläsern mit progressiven Rückflächen gezeigt, daß im stärkeren Plusbereich die sphärischen Vorderflächen krümmer gestaltet werden müssen als die Vorderflächen im Fernbereich von Gläsern mit progressivere Vorderflächen. Dies wird vom Brillenträger sowohl aus optischen wie auch aus kosmetischen Gründen, als Nachteil empfunden. Der Grund hierfür liegt in der Geometrie der Linsen: Konstruiert man beispielsweise ein Glas mit Fernteilwirkung +5 dpt, so verwendet man im Falle progressiver vorderflächen beispielhaft eine Vorderfläche mit einem Flächenbrechwert von +7 dpt, der im Nahbereich auf angenähert +10 dpt ansteigt, wenn das Glas eine Addition von 3 dpt aufweisen soll. Die sphärische Rückfläche hat dann in etwa -2 dpt Flächenbrechwert, was im Fernbereich eine Wirkung von ca, + 5 dpt bewirkt.

Wenn man im Falle progressiver Rückflächen eine sphärische Vorderfläche wählen würde, die so flach ist wie der Fernbereich des Glases mit progressiver Vorderfläche (d.h.7 dpt), müsste die Rückfläche im Fernbereich einen Flächenbrechwert von -2 dpt aufweisen. Bei progressiven Rückflächen muß die mittlere Krümmung vom Fern- zum Nahbereich abnehmen und nicht etwa zunehmen, wie es bei progressiven Vorderflächen der Fall wäre. Somit muß der Flächenbrechwert von -2 dpt um 3 dpt auf +1 dpt ansteigen, um eine Addition von 3 dpt zu bewirken. Diese Flächengestaltungsform wird Krümmungsumkehr genannt. Die Fläche ist nicht mehr nur, wie das bei konventionellen Produkten der Fall ist, konkav, sondern hat in einem Vertikalschnitt einen S-förmigen Verlauf. Jedoch weisen Rückflächen mit Krümmungsumkehr bestimmte Trageeigenschaften auf, die beim Brillenträger zu Problemen führen können. Ein Problem ist die relative Nähe der Rückfläche zum Auge, wenn man solche Gläser in konventionelle Fassungen einschleift. Da die Wimpern dann am Glas anstoßen, führt dies häufig zu Irritationen. Ein weiteres Problem stellen die verstärkt auftretenden Reflexe da, welche sich störend auswirken und den Kontrast beim Sehen reduzieren. Um diese Effekte zu vermeiden, kann man bei Gläsern mit progressiver Rückfläche nur die Krümmung der Vorderfläche erhöhen, was jedoch die Gläser dicker und kosmetisch nicht ansprechend macht. Auch steigt dadurch die Eigenvergrößerung der Gläser, was dazu führt, daß der sogenannte "Kuhauganaffekt" verstärkt wird.

EP 0 996 023 A2 offenbart ein doppelprogressives Brillenglas, wobei die beiden progressiven Flächen zu einander fehlausgerichtet sind,

Aufgabe der Erfindung ist daher die Bereitstellung eines Brillenglases , mit dem die geschilderten Nachteile des Standes der Technik vermieden werden.

Diese Aufgabe wird durch ein Verfahren zum Herstellen eines doppelprogressiven Brillenglases mit den im Anspruch 1 angegebenen Merkmalen gelöst. Bevorzugte Ausführungsformen ergeben sich aus den Unteranspruchen.

Insbesondere wird bei dem doppelprogressiven Brillenglas die progressive Wirkung auf Vorder- und Rückfläche der doppelprogressiven Brillengläsern verteilt und durch den Quotienten Q

$$Q = Add_{Vfl} / Add_{Gesamt}$$

beschrieben wird, wobei $Add_{Vfl}$ der Zuwachs des Flächenbeechwertes längs der Hauptlinie auf der vorderfläche zwischen dem Fernbereich und dem Nahbereich und $Add_{Gesant}$ der Zuwachs des gesamten Brechwertes längs der Hauptlinie zwischen dem Fernhereich und dem Nahbereich darstellen und der Anteil Q mit wachsender Fernteilwirkung F steigt:

$$\frac{dQ(F)}{dF} \geq 0 \text{ .}$$

Es sprechen verschiedene Gründe dafür, nicht die gesamte Addition auf die Rückfläche zu legen: Um Reflexe, die ein Betrachter sieht, der dem Brillenträger gegenüber steht, räumlich klein zu halten, sollte die vorderfläche nicht zu flach gestaltet werden. Denn ansonsten "blitzt" bei ungünstiger Beleuchtung und Kopfbewegung das gesamte Brillenglas im Reflex auf, was den Betrachter irritiert. Wird die Vorderfläche progressiv gestaltet, so ergeben sich ästhetischere Reflexe, weil wenigstens der untere Teil des Glases eine höhere Krümmung aufweist. Ein weiterer Grund ist die schlechte Fertigbarkeit progressiver Rückflächen bei starken Minuswirkungen.

Aufgrund der Dynamik der notwendigerweise kleinen Werkzeuge beim Schleifen und Polieren ist es günstiger, nur einen geringen Anteil der Addition auf der Rückfläche zu haben. Somit hat es sich als vorteilhaft erwiesen, d. h. mit Ausnahme extremer Minuswirkungen nicht die gesamte Addition auf die Rückfläche zu legen.

Es ist nun erkannt worden, daß die negativen Auswirkungen von Gläsern mit progressiven Rückflächen vermieden werden können, wenn man im Plusbereich einen erheblichen Teil der Addition auf die Vorderfläche überträgt. Auch ist erkannt worden, daß es im Minusbereich günstiger ist, einen gewissen Teil der Addition auf der Rückfläche zu implementieren. Um die Aufteilung des Brechwertzuwachses auf Vorder- und Rückfläche zu beschreiben, werden nachfolgende Definitionen eingeführt:

$Add_{vfl}$ = Zuwachs des Flächenbrechwertes längs der Hauptlinie auf der Vorderfläche zwischen dem Fernbereich und dem Nahbereich.

$Add_{Gesamt}$ = Zuwachs des gesamten Brechwertes längs der Hauptlinie zwischen dem Fernbereich und dem Nahbereich, hervorgerufen durch die dioptrische Wirkung sowohl der Vorder- als auch der Rückfläche.

Der auf die Vorderfläche entfallende Anteil an der Addition ergibt sich durch eine dimensionslose Kennzahl, den Quotienten Q

$$Q = Add_{vfl} / Add_{Gesamt} \, .$$

Aus dieser Definition ergeben sich verschiedene Fälle:

Bei einem konventionellen Gleitsichtglas, bei dem die progressive Fläche vorne liegt und die Rückfläche eine (A-Sphäre) oder ein (A-)Torus ist, leistet die Rückfläche keinen Beitrag zur Addition. Somit ist $Add_{vfl} = Add_{Gesamt}$ und der Quotient Q = 1.

Bei einem Gleitsichtglas, bei dem sich die progressive Fläche hinten befindet und die Vorderfläche eine (A-) Sphäre oder (A-)Torus ist, liefert dagegen die Vorderfläche keinen Beitrag zur Addition. Somit ist $Add_{vfl}$ = 0 dpt und bei endlicher Gesamtaddition $Add_{Gesamt}$ wird der Quotient Q = 0.

Bei einem Gleitsichtglas mit zwei progressiven Flächen muss der Wert Q nicht notwendig zwischen 0 und 1 liegen. Q kann einen Wert von <0 aufweisen, und zwar dann, wenn die Vorderfläche eine degressive Wirkung hat. Die Rückfläche muß dann eine Addition aufweisen, die größer ist als der verordnete Wert. Dagegen kann Q auch größer als 1 sein. Dies ist dann der Fall wenn die Vorderfläche eine Addition aufweist, die größer als die verordnete ist. Dann muß die zu starke Wirkungszunahme der vorderfläche durch eine Wirkungsabnahme auf der Rückfläche kompensiert werden.

Weiter steigt der Anteil Q nach einer annähernd linearen Funktion der sphärischen Fernteilwirkung F an

$$Q(F) = Q_0 \pm dQ_0 + (Q_1 \pm dQ_1) \cdot F$$

mit $Q_0$ = 0,5 und $Q_1$ = 0,04/dpt
und $dQ_0$ = 0,2 und $dQ_1$ = 0,02/dpt.

Ferner kann der Anteil Q nach einer linearen Funktion der Fernteilwirkung F ansteigen

$$Q(F) = Q_0 + Q_1 \cdot F$$

mit $Q_0$ = 0,5 und $Q_1$ = 0,04/dpt.

Erfindungsgemäß ist es nun günstiger, im Fernbereich negativar Farnwirkungen tendenziell einen größeren Anteil der progressiven Wirkung auf die Rückfläche zu legen. Im stärkeren Minusbereich kann es sogar sinnvoll sein, Q negativ zu wählen.

Im Plusbereich ist es, wie bereits erwähnt, günstiger, einen hohen Anteil der Addition auf der Vorderfläche zu haben. Somit kann es sich im stärkeren Plusbereich als vorteilhaft erweisen, Q sogar größer 1 zu wählen.

Diese Erkenntnise führen dazu, daß man den Additionsanteil Q wirkungsabhängig gestalten muß. Dies ist beispielhaft mit dem folgendem Modell möglich:

Tabelle 1: Abhängigkeit des Quotienten Q von der Wirkung und die Toleranzbreiten

| Sphärische Wirkung | Nennwert Q | Minimum Q | Maximum Q |
|---|---|---|---|
| ≤ - 10 dpt | 0,2 | 0 | 0,4 |

(fortgesetzt)

| Sphärische Wirkung | Nennwert Q | Minimum Q | Maximum Q |
|---|---|---|---|
| - 5 dpt | 0,3 | 0,1 | 4,5 |
| 0 dpt | 0,5 | 0,3 | 0,7 |
| + 5 dpt | 0,7 | 0,5 | 0,9 |
| ≥ + 10 dpt | 0,8 | 0,6 | 1 |

Es ist auch möglich, einen anderen Übergang zu wählen, nämlich den, der in Tabelle 2 beschrieben ist.

Tabelle 2: Abhängigkeit des Quotienten Q von der Wirkung und die Toleranzbreiten

| Sphärische Wirkung | Nennwert Q | Minimum Q | Maximum Q |
|---|---|---|---|
| ≤ - 10 dpt | 0,1 | -0,1 | 0,3 |
| - 5 dpt | 0, 3 | 0,1 | 0,5 |
| 0 dpt | 0, 5 | 0,3 3 | 0,7 |
| + 5 dpt | 0, 7 | 0,5 5 | 0 , 9 |
| ≥ + 10 dpt | 0,9 | 0,7 | 1,1 |

Die Erfindung wird nachstehend ohne Beschränkung des allgemeinen Erfindungsgedanken anhand von Ausführungsbeispielen unter Bezugnahme auf die Zeichnungen exemplarisch beschrieben, auf die im Übrigen hinsichtlich der Offenbarung aller im Text nicht näher erläuterten erfindungsgemäßen Einzelheiten ausdrücklich verwiesen wird.

Es zeigen:

Fig. 1 die Abhängigkeit des Anteils(Q)der Vorderfläche an der Addition von der Fernwirkung.
Fig. 2 die Abhängigkeit des Anteils (Q) der Vorderfläche an der Addition von der Fernwirkung.

Aus der Fig. 1 ist deutlich der Anstieg der Kurve zu erkennen, wobei in den extremeren Wirkungsbereichen der Anstieg leicht abgeflacht ist. In Fig. 2 ist die graphische Darstellung der tabellierten Werte von Tabelle 2 gegeben. Man erkennt deutlich einen rein linearen Anstieg, wobei in den extremen Wirkungsbereichen der Anstieg nicht abgeflacht ist. Bei beiden Figuren erstreckt sich der Schutzumfang schlauchförmig über den Bereich zwischen oberer und unterer Grenze.

## Patentansprüche

1. Verfahren zum Herstellen eines doppelprogressiven Brillenglases, umfassend einen Schritt der Berechnung der Verteilung der progressiven Wirkung auf Vorder- und Rückfläche des doppelprogressiven Brillenglases, wobei die Verteilung der progressiven Wirkung durch den Quotienten Q

$$Q = Add_{vfl} / Add_{Gesamt}$$

beschrieben wird, und
$Add_{vfl}$ der Zuwachs des Flächenbrechwertes längs der Hauptlinie auf der Vorderfläche zwischen dem Fernbereich und dem Nahbereich und $Add_{Gesamt}$ der Zuwachs des gesamten Brechwertes längs der Hauptlinie zwischen dem Fernbereich und dem Nahbereich darstellen; und
wobei
die Berechnung der Verteilung der progressiven Wirkung auf Vorder- und Rückfläche des doppelprogressiven Brillenglases derart erfolgt, daß der Anteil Q mit wachsender Femteilwirkung *F* nach einer annähernd linearen Funktion der sphärischen Fernteilwirkung *F* ansteigt:

$$Q(F) = Q_0 \pm dQ_0 + (Q_1 \pm dQ_1) \cdot F$$

mit $Q_0$ = 0,5 und $Q_1$ = 0,04/dpt
und $dQ_0$ = 0,2 und $dQ_1$ = 0,02/dpt .

**2.** Verfahren nach Anspruch 1, **dadurch gekennzeichnet, dass** der Anteil *Q* nach einer linearen Funktion der sphärischen Fernteilwirkung steigt:

$$Q(F) = Q_0 + Q_1 \cdot F$$

mit $Q_0$ = 0,5 und $Q_1$ = 0,04 /dpt.

**3.** Verfahren nach Anspruch 1, **dadurch gekennzeichnet, dass** der Anteil Q nach einer annähernd linearen Funktion der sphärischen Fernteilwirkung steigt:

$$Q(F) = Q_0 \pm dQ_0 + (Q_1 \pm dQ_1) \cdot F$$

mit $Q_0$ = 0,5 und $Q_1$ = 0.04 /dpt
und $dQ_0$ = 0,1 und $dQ_1$ = 0,01 /dpt.

**4.** Verfahren nach einem der Ansprüche 1-3, **dadurch gekennzeichnet, dass** der Anteil *Q* in Abhängigkeit von der Fernteilwirkung innerhalb folgender Werte liegt:

| Sphärische Wirkung | Nennwert *Q* | Minimum *Q* | Maximum *Q* |
|---|---|---|---|
| ≤ - 10 dpt | 0,2 | 0 | 0,4 - |
| - 5 dpt | 4,3 | 0,1 | 0,5 |
| 0 dpt | 0,5 | 0,3 | 0,7 |
| + 5 dpt | 0,7 | 0,5 | 0,9 |
| ≥ + 10dpt | 0,8 | 0,6 | 1 |

**5.** Verfahren nach einem der Ansprüche 1-3, **dadurch gekennzeichnet, dass** der Anteil Q in Abhängigkeit von der Fernteilwirkurtg innerhalb folgender Werte liegt:

| Sphärische Wirkung | Nennwert *Q* | Minimum *Q* | Maximum *Q* |
|---|---|---|---|
| ≤ - 10dpt | 0, 1 | -0,1 | 0,3 |
| - 5 dpt | 0,3 | 0,1 | 0,5 |
| 0 dpt | 0,5 | 0,3 | 0,7 |
| + 5 dpt | 0,7 | 0,5 | 0,9 |
| ≥ + 10 dpt | 0,9 | 0,7 | 1,1 |

**6.** Verfahren nach einem der Ansprüche 1-5, **dadurch gekennzeichnet, dass** *Q*< 0 oder > 1 ist.

## Claims

1. Process for the production of a double progressive spectacle lens, comprising a step of calculating the distribution of the progressive effect on the front and rear surface of the double progressive spectacle lens, wherein the distribution of the progressive effect is described by quotient Q

$$Q = Add_{vfl} / Add_{total}$$

and
$Add_{vfl}$ represents the increase in the surface refractive index along the principal line on the front surface between the distant area and the near area and $Add_{total}$ represents the increase in the total refractive index along the principal line between the distant area and the near area; and
wherein
the calculation of the distribution of the progressive effect on the front and rear surface of the double progressive spectacle lens is achieved in such a manner that the quantity Q increases as the distant part effect F increases according to an approximately linear function of the spherical effect of the distant part:

$$Q(F) = Q_0 \pm dQ_0 + (Q_1 \pm dQ_1) \cdot F$$

where $Q_0 = 0.5$ and $Q_1 = 0.04$ /dpt
and $dQ_0 = 0.2$ and $dQ_1 = 0.02$ /dpt.

2. Process according to claim 1, **characterised in that** the quantity Q increases according to a linear function of the spherical effect of the distant part:

$$Q(F) = Q_0 + Q_1 \cdot F$$

where $Q_0 = 0.5$ and $Q_1 = 0.04$ /dpt.

3. Process according to claim 1, **characterised in that** the quantity Q increases according to a linear function of the spherical effect of the distant part:

$$Q(F) = Q_0 \pm dQ_0 + (Q_1 \pm dQ_1) \cdot F$$

where $Q_0 = 0.5$ and $Q_1 = 0.04$ /dpt
and $dQ_0 = 0.1$ and $dQ_1 = 0.01$ /dpt.

4. Process according to one of claims 1-3, **characterised in that** the quantity Q as a function of the distant part effect lies within the following values:

| Spherical effect | Nominal value Q | Minimum Q | Maximum Q |
|---|---|---|---|
| ≤ - 10 dpt | 0.2 | 0 | 0.4 |
| - 5 dpt | 0.3 | 0.1 | 0.5 |
| 0 dpt | 0.5 | 0.3 | 0.7 |
| + 5dpt | 0.7 | 0.5 | 0.9 |
| ≥ + 10dpt | 0.8 | 0.6 | 1 |

**5.** Process according to one of claims 1-3, **characterised in that** the quantity Q as a function of the distant part effect lies within the following values:

| Spherical effect | Nominal value Q | Minimum Q | Maximum Q |
|---|---|---|---|
| ≤ - 10 dpt | 0.1 | - 0.1 | 0.3 |
| - 5 dpt | 0.3 | 0.1 | 0.5 |
| 0 dpt | 0.5 | 0.3 | 0.7 |
| + 5dpt | 0.7 | 0.5 | 0.9 |
| ≥ + 10dpt | 0.9 | 0.7 | 1.1 |

**6.** Process according to one of claims 1-5, **characterised in that** Q is < 0 or > 1.

**Revendications**

**1.** Procédé de fabrication d'un verre de lunettes à effet progressif double, comprenant une étape de calcul de la répartition de l'effet progressif sur la face avant et la face arrière du verre de lunettes à effet progressif double, la répartition de l'effet progressif étant décrite par le quotient Q

$$Q=Add_{vfl}/\,Add_{total}$$

et
$Add_{vfl}$ représentant l'accroissement de la focale des surfaces le long de la ligne principale sur la face avant entre la zone lointaine et la zone proche, et $Add_{total}$ représentant l'accroissement de la focale totale le long de la ligne principale entre la zone lointaine et la zone proche ; et
moyennant quoi
le calcul de la répartition de l'effet progressif sur la face avant et la face arrière du verre de lunettes à effet progressif double a lieu de telle sorte que la part Q avec effet croissant du segment de loin F augmente selon une fonction approximativement linéaire de l'effet sphérique de segment de loin F:

$$Q(F) = Q_0 \pm dQ_0 + (Q_1 \pm dQ_1) . F$$

avec $Q_0$ = 0,5 et $Q_1$ = 0,04/dpt
et $dQ_0$ = 0,2 et $dQ_1$ = 0,02/dpt.

**2.** Procédé selon la revendication 1, **caractérisé en ce que** la part Q augmente selon une fonction linéaire de l'effet sphérique de segment de loin:

$$Q(F) = Q_0 + Q_1 . F$$

avec $Q_0$ = 0,5 et $Q_1$ = 0,04/dpt.

**3.** Procédé selon la revendication 1, **caractérisé en ce que** la part Q augmente selon une fonction approximativement linéaire de l'effet sphérique de segment de loin:

$$Q(F) = Q_0 \pm dQ_0 + (Q_1 \pm dQ_1) . F$$

avec $Q_0 = 0{,}5$ et $Q_1 = 0{,}04/\text{dpt}$
et $dQ_0 = 0{,}1$ et $dQ_1 = 0{,}01/\text{dpt}$.

**4.** Procédé selon l'une quelconque des revendications 1 à 3, **caractérisé en ce que** la part Q se situe en fonction de l'effet de segment de loin au sein des valeurs suivantes:

| Effet sphérique | Valeur nominale Q | Minimum Q | Maximum Q |
|---|---|---|---|
| ≤ - 10 dpt | 0,2 | 0 | 0,4 |
| - 5 dpt | 0,3 | 0,1 | 0,5 |
| 0 dpt | 0,5 | 0,3 | 0,7 |
| + 5 dpt | 0,7 | 0,5 | 0,9 |
| ≥ + 10 dpt | 0,8 | 0,6 | 1 |

**5.** Procédé selon l'une quelconque des revendications 1 à 3, **caractérisé en ce que** la part Q se situe en fonction de l'effet de segment de loin au sein des valeurs suivantes :

| Effet sphérique | Valeur nominale Q | Minimum Q | Maximum Q |
|---|---|---|---|
| ≤- 10 dpt | 0,1 | -0,1 | 0,3 |
| - 5 dpt | 0,3 | 0,1 | 0,5 |
| 0 dpt | 0,5 | 0,3 | 0,7 |
| + 5 dpt | 0,7 | 0,5 | 0,9 |
| ≥ + 10 dpt | 0,9 | 0,7 | 1,1 |

**6.** Procédé selon l'une quelconque des revendications 1 à 5, **caractérisé en ce que** Q est < 0 ou > 1.

Fig. 1

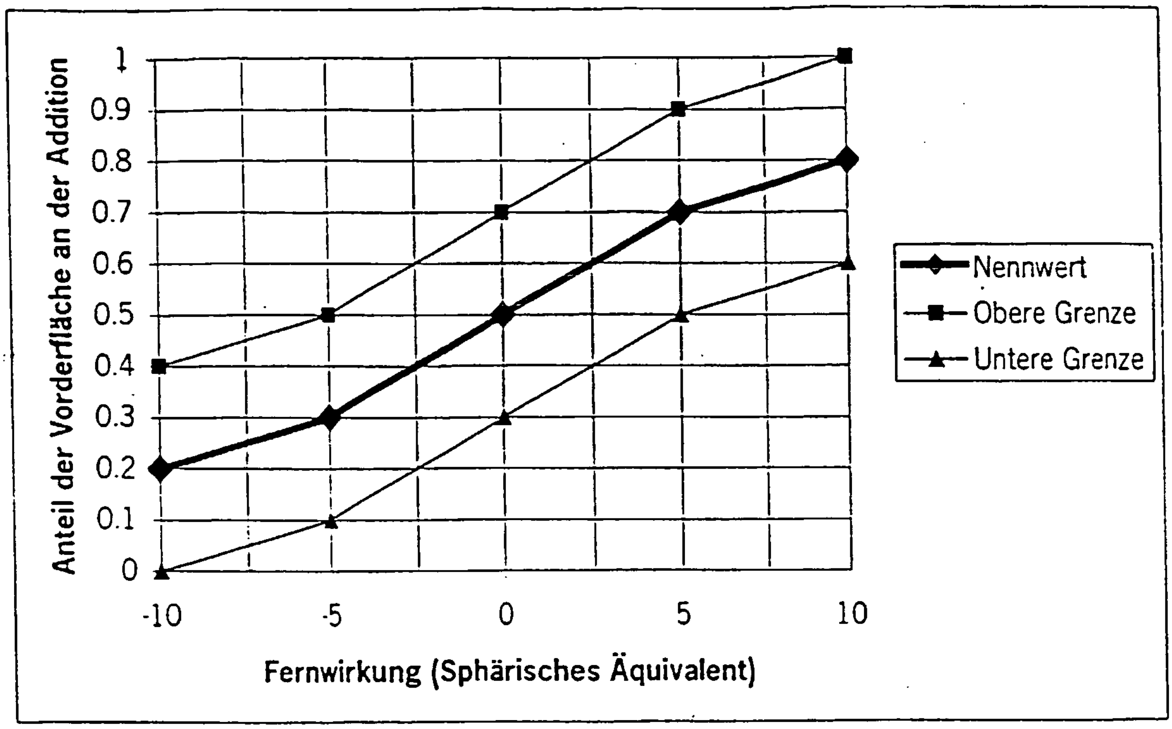
Anteil der Vorderfläche an der Addition
1
0.9
0.8
0.7
0.6
0.5
0.4
0.3
0.2
0.1
0
-10
-5
0
5
10
Fernwirkung (Sphärisches Äquivalent)
Nennwert
Obere Grenze
Untere Grenze

Fig. 2

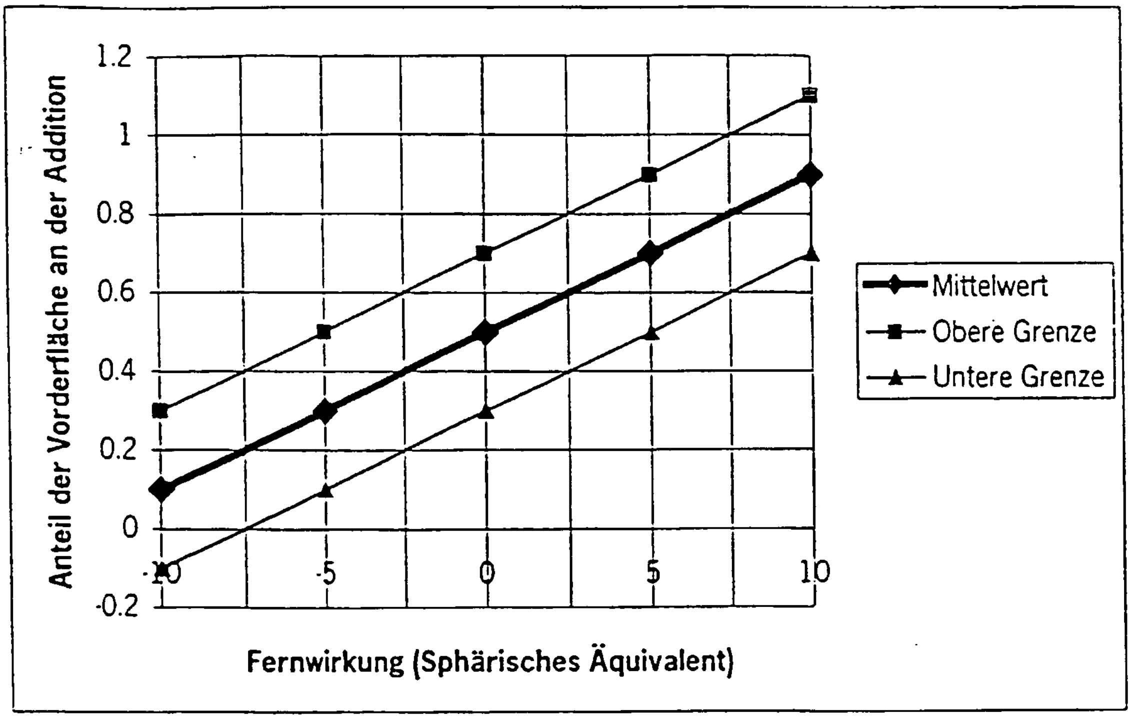
1.2
1
0.8
0.6
0.4
0.2
0
-0.2
-10
-5
0
5
10
Anteil der Vorderfläche an der Addition
Fernwirkung (Sphärisches Äquivalent)
Mittelwert
Obere Grenze
Untere Grenze

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19701312 A1
- DE 3331757 A1
- EP 0996023 A2